# EUROPEAN PATENT APPLICATION

(11) **EP 4 772 562 A1**
(43) Date of publication of application: **08.07.2026**
(21) Application number: 24860280.7
(22) Date of filing: 20.08.2024
(51) Int. Cl.: C08G 73/10

(54) **SOLVENT-SOLUBLE POLYIMIDE WITH SIMPLIFIED PREPARATION PROCESS AND PREPARATION METHOD THEREFOR**

(30) Priority: 30.08.2023 KR 20230114340
(71) Applicant: PI Advanced Materials Co., Ltd., Chungcheongbuk-do 27818 (KR)
(72) Inventor: LEE, Kyuwon, Jincheon-gun, Chungcheongbuk-do 27818 (KR); HWANG, Jeong Jae, Jincheon-gun, Chungcheongbuk-do 27818 (KR); RYU, Han Tae, Jincheon-gun, Chungcheongbuk-do 27818 (KR); LEE, Kil Nam, Jincheon-gun, Chungcheongbuk-do 27818 (KR)
(74) Representative: Symbiosis IP Limited
(86) International application number: PCT/KR2024/012317
(87) International publication number: WO 2025/048359

(57) **Abstract**

The present invention provides a method for preparing a polyimide, comprising: (a) polymerizing a diamine monomer with a dianhydride monomer to prepare a polyamic acid; and (b) reacting the polyamic acid with carbonyl diimidazole to prepare a soluble polyimide, wherein the soluble polyimide is in the form of a varnish.

## Description

### [Technical Field]

The present invention relates to a solvent-soluble polyimide and a method for preparing the same. More specifically, the present invention relates to a polyimide having excellent thermal and mechanical properties while simplifying the process, and a method for preparing the same.

### [Background Art]

In general, polyimide (PI) is a polymer material based on an imide ring having excellent chemical stability together with a rigid aromatic main chain, which has the highest level of heat resistance, chemical resistance, electrical insulation, chemically resistant property, and weather resistance among organic materials, thereby being prepared into various forms such as films, fibers, membranes, etc. Due to these characteristics, polyimide is used, as an advanced material and insulation coating, in a wide range of fields such as electrical and electronics, semiconductors, displays, automobiles, aviation, and space materials.

Polyimide may be prepared by dissolving, in a solvent, acid dianhydride having two acid anhydride groups in its molecule and diamine having two amino groups in its molecule to synthesize a polyimide precursor called polyamic acid (PAA), and applying and drying the polyimide precursor, followed by heat treatment at about 350°C to perform imidization. Since there has been a high demand to handle polyimide in a solution state, and a lot of development is underway for solvent-soluble polyimide.

However, conventional polyimide prepared by imidization through dehydration and ring closure reaction using conventional chemical method or thermal (high temperature) method had insoluble properties in solvents, causing a difficulty in processing. In addition, in order to prepare polyimide soluble in solvents, in general, there is no choice but to use highly soluble monomers, but these monomers generally have low heat resistance, and thus the prepared polyimide has a problem of low heat resistance and low chemical resistance. Meanwhile, in order to use polyimide in the form of a solution while having heat resistance or chemical resistance, there is a method for preparing a polyimide by forming a coating film with a polyamic acid solution, which is a polyimide precursor, and then performing imidization.

Meanwhile, the polyamic acid solution has the disadvantages of being vulnerable to humidity and difficult to handle and store, and requiring a complex and lengthy treatment process or a heat treatment process at high temperature to imidize the polyamic acid.

Under this background, there is a need to develop polyimide capable of maintaining the high heat resistance and insulation properties thereof, while being easily soluble in organic solvents and capable of preparing polyimide-based products only by a simple process.

### [Disclosure]

### [Technical Problem]

An object of the present invention is to provide a method for preparing a polyimide having excellent thermal and mechanical properties while simplifying the preparation process by omitting purification, filtration, and drying steps for removing by-products (impurities).

In addition, another object of the present invention is to provide a method for preparing a polyimide that is fully imidized and has soluble properties in an organic solvent.

Further, still another object of the present invention is to provide a polyimide prepared according to the method for preparing the polyimide.

In addition, still another object of the present invention is to provide various forms of polyimides, such as separators (membranes), binders, insulation coatings, and coating materials comprising the polyimide.

Further, still another object of the present invention is to provide a composition for preparing a polyimide capable of being used in the method for preparing the polyimide.

### [Technical Solution]

Various modifications can be made and various embodiments may be implemented in the present invention, and specific embodiments are illustrated in the drawings and described in detail. However, these embodiments are not intended to limit the present invention to specific embodiments, and should be understood to comprise all modifications, equivalents, and substitutes included in the spirit and scope of the present invention.

Terms used in the present application are only used to describe specific embodiments and are not intended to limit the present invention. Singular expressions include plural expressions unless the context clearly indicates otherwise. In the present specification, terms such as "comprise" or "have" are intended to designate the presence of features, numbers, steps, operations, components, parts, or combinations thereof described in the specification and it should not be understood as precluding the possibility of the presence or addition of one or more other features, numbers, steps, operations, components, parts, or combinations thereof.

When amounts, concentrations, or other values or parameters herein are given as ranges, preferred ranges, or lists of upper desirable values and lower desirable values, it should be understood as specifically disclosing all ranges formed by any pair of any upper range limit or preferred value and any lower range limit or preferred value, regardless of whether the scope is separately disclosed.

When ranges of numerical values are stated herein, unless otherwise stated, it is intended that the endpoints of the range and the scope of the parent invention within the range are not limited to the specific values stated when defining the range.

As used herein, "dianhydride" is intended to include precursors or derivatives thereof, which are also referred to as "dianhydride" or "acid dianhydride". These products may technically not be dianhydrides, but will nonetheless react with diamines to form polyamic acids, and the polyamic acids may be converted back into polyimides.

As used herein, "diamine" is intended to include precursors or derivatives thereof, which may technically not be diamines, but will nonetheless react with dianhydride acid to form a polyamic acid, and the polyamic acid may be converted back into polyimide.

Further, unless defined otherwise, all terms used herein, including technical or scientific terms, have the same meaning as commonly understood by one of ordinary skill in the art to which the present invention belongs. Terms such as those defined in commonly used dictionaries should be interpreted as having a meaning consistent with the meaning in the context of the related art, and unless explicitly defined in the present application, it is not to be construed in an idealized or overly formal sense. Specific details for the implementation of the invention will be described below.

The present invention relates to a method for preparing a polyimide capable of preparing a polyimide having excellent thermal and mechanical properties while simplifying the preparation process by omitting purification, filtration and drying steps for removing by-products (impurities).

### Method for preparing polyimide

In one general aspect, the present invention provides a method for preparing a polyimide, comprising: (a) polymerizing a diamine monomer with a dianhydride monomer to prepare a polyamic acid; and (b) reacting the polyamic acid with carbonyl diimidazole to prepare a soluble polyimide, wherein the soluble polyimide is in the form of a varnish.

After step (b), purification processes including purification, filtration, and drying steps may not be performed.

In conventional chemical imidization, a polyimide is subjected to purification processes such as purification, washing, filtration and drying for removing by-products, thereby being obtained in the form of a powder and then is dissolved in a polar organic solvent. Whereas, by using the additive, carbonyl diimidazole (CDI) having both catalyst and dehydrating agent functions, the present invention may directly employ the polyimide in the form of a varnish while omitting the purification processes such as purification, filtration, and drying steps.

In step (a), 0.5 to 1.5 mol equivalents of the carbonyl diimidazole may be reacted with 1 mol equivalent of the polyamic acid. For example, an upper limit thereof may be 1.5, 1.4, 1.3, 1.2, 1.1 mol equivalent or less, and a lower limit thereof may be 0.5, 0.6, 0.7, 0.75, 0.8, 0.85, 0.9, 0.95 mol equivalent or more. When the carbonyl diimidazole is reacted in an amount of less than 0.5 mol equivalent, it is not preferable since the physical properties of the prepared polyimide deteriorate. When the carbonyl diimidazole is reacted in an amount exceeding 1.5 mol equivalent, it is not preferable since an additional purification process is required.

The purification process may refer to a series of processes such as purification, washing, filtration, and drying to remove by-products (impurities, catalysts, unreacted products, etc.) after performing the imidization process.

Further, the purification may include purification methods conventionally used in polymer synthesis, including re-precipitation, such as alcohol precipitation.

Step (b) may be performed at a temperature of 20 to 60°C. For example, an upper limit thereof may be 60°C, 58°C, 55°C, 52°C, 50°C, 48°C, 45°C, 44°C, 43°C, 42°C, 41°C or lower, and a lower limit thereof may be 20°C, 22°C, 25°C, 28°C, 30°C, 32°C, 35°C, 36°C, 37°C, 38°C or higher.

Step (b) may be performed for 0.5 to 5 hours. For example, an upper limit thereof may be 5, 4.5, 4, 3.5, 3, 2.7 hours or less, and a lower limit thereof may be 0.5, 0.8, 1, 1.2, 1.5, 2.0, 2.3 hours or more.

The reaction in step (b) is an imidization reaction, and an imidation rate may be 97 to 100%, preferably 98 to 100%, more preferably 99 to 100%, and most preferably 100%.

In step (a), the polymerization may be random polymerization or block polymerization.

Specifically, when the random polymerization is performed, it is possible to prepare a random copolymer, and specifically, a copolymer composed of two or more types of polymerized units (repeating units). For example, the expression "-(A)a-(B)b-(C)c-(D)d-", which is a random copolymer of polymerized units A to D, means that the polymerized units are randomly connected in various forms, such as -(A-B-A-D-A-B-A-B-C)-, -(A-A-C-C-C-B-B-D-B)-, -(A-A-D-A-B-A-D-A-B-A-C-C)-, and the like, wherein a, b, c, and d are the proportions of polymerized units A, B, C, and D, respectively.

Further, the step (a) may comprise: (a-1) adding the total dianhydride monomers to the total diamine monomers; and (a-2) performing random-polymerization on the total dianhydride monomers and the total diamine monomers. For example, when performing the random polymerization, the total diamine monomers may be dissolved in an organic solvent, and then the total dianhydride monomers may be added and dissolved, followed by polymerization to prepare a polyamic acid.

Specifically, when the block polymerization is performed, it is possible to prepare a block copolymer, and specifically, a copolymer composed of two or more types of polymerized units (repeating units). For example, the expression "-(A)a-(B)b-(C)c-(D)d-", which is a block copolymer of polymerized units A to D, means that the same polymerized units in the form of -(A-A-A-B-B-B-B-B-C-C-C-C-D-D-D)- are consecutively connected, wherein a, b, c, and d are the proportions of polymerized units A, B, C, and D, respectively.

In addition, the step (a) may comprise: (a-1) adding any one dianhydride monomer to any one diamine monomer; and (a-2) performing block polymerization on any one diamine monomer and any one dianhydride monomer, and the steps (a-1) and (a-2) may be repeated multiple times. For example, the block polymerization may be performed to prepare a polyamic acid by repeating the steps of dissolving one diamine monomer in an organic solvent, and adding one dianhydride monomer, followed by polymerization, and then adding another diamine monomer, followed by polymerization, and adding another dianhydride monomer, followed by polymerization.

The dianhydride monomer may comprise at least one selected from the group consisting of pyromellitic dianhydride (PMDA), 3,3',4,4'-benzophenone tetracarboxylic dianhydride (BTDA), oxydiphthalic dianhydride (ODPA), 4,4'-(hexafluoroisopropylidene)diphthalic anhydride (6FDA), biphenyltetracarboxylic dianhydride (BPDA), 3,3',4,4'-diphenylsulfone tetracarboxylic dianhydride (DSDA), and 2,2-bis(4-(3,4-dicarboxyphenoxy)phenyl)propane dianhydride. More specifically, the dianhydride monomer may be any one or a combination of two or more of the above-described dianhydride monomers. More specifically, the dianhydride monomer preferably comprises one type, and more specifically, preferably comprises 3,3',4,4'-benzophenone tetracarboxylic dianhydride (BTDA).

The diamine monomer may comprise at least one selected from the group consisting of 4,4'-methylenebis(2,6-diethylaniline) (MEDA), 2,4-diaminotoluene (2,4-TDA), 2,6-diaminotoluene (2,6-TDA), m-phenylenediamine (m-PD), p-phenylenediamine (p-PD), 3,3' '-diaminodiphenyl sulfone (3,3''-DDS), 2,2-bis(3-amino-4-hydroxyphenyl)hexafluoropropane (6FAP), 3,5-diethyltoluene-2,6-diamine, 3,5-diethyltoluene-2,4-diamine, and 4,4'-methylenebis(2-ethyl-6-methylaniline) (MEMA). More specifically, the diamine monomer may be any one or a combination of two or more of the above-described diamine monomers. More specifically, the diamine monomer preferably comprises at least one type, and more specifically, preferably comprises 4,4'-methylenebis(2,6-diethylaniline) (MEDA) and 2,4-diaminotoluene (2,4-TDA).

In an embodiment, the polyamic acid may be a polymerization of the dianhydride monomer, 3,3',4,4'-benzophenone tetracarboxylic dianhydride (BTDA); and the diamine monomers, 4,4'-methylenebis(2,6-diethylaniline) (MEDA) and 2,4-diaminotoluene (2,4-TDA).

An amount of the 4,4'-methylenebis(2,6-diethylaniline) (MEDA) in the total diamine monomers may be more than 0 mol% and less than or equal to 50 mol%. For example, an upper limit thereof may be 50 mol%, 40 mol%, 30 mol%, 20 mol%, 18 mol%, 17 mol%, 15 mol%, 13 mol%, 12 mol% or less, and a lower limit thereof may be 0.1 mol%, 1 mol%, 2 mol%, 3 mol%, 4 mol% or more.

An amount of the 2,4-diaminotoluene (2,4-TDA) in the total diamine monomers may be less than 100 mol% but equal to or more than 50 mol%. For example, an upper limit thereof may be 99.9 mol%, 99 mol%, 98 mol%, 97 mol%, 96 mol% or less, and a lower limit thereof may be 50 mol%, 60 mol%, 70 mol%, 72 mol%, 73 mol%, 75 mol%, 78 mol%, 80 mol%, or more.

The polyimide may comprise the diamine monomer in an amount of 90 to 110 mol%, preferably 95 to 105 mol%, and more preferably 100 mol%.

The polyimide may comprise the dianhydride monomer in an amount of 90 to 110 mol%, preferably 95 to 105 mol%, and more preferably 100 mol%.

The polyimide may comprise the dianhydride monomer and the diamine monomer in a molar ratio of 1 : 2 to 2 : 1, preferably in a molar ratio of 1 : 1.

The polyimide may be a soluble polyimide having a high solubility in an organic solvent for a solid content of 15 wt%, 16 wt%, 17 wt%, 18 wt%, 19 wt%, 20 wt%, 21 wt%, 22 wt%, 23 wt%, 24 wt%, or 25 wt% or more. An upper limit thereof is not particularly limited, but may be 50 wt% or less.

The organic solvent may be an aprotic polar organic solvent, and specifically, may comprise at least one selected from the group consisting of N-methyl-pyrrolidone (NMP), N,N'-dimethylformamide (DMF), N,N'-diethylformamide (DEF), N,N'-dimethylacetamide (DMAc), dimethylpropanamide (DMPA), and N,N-diethylacetamide (DEAc).

In the present invention, a thermal decomposition temperature (Td) and a glass transition temperature (Tg) were measured, in which the thermal decomposition temperature is mainly used as a standard for judging thermal properties of polyimide, and the glass transition temperature is able to predict thermal properties while also ensuring mechanical properties.

The thermal decomposition temperature (Td) at 5% weight loss of the polyimide may be 485°C or higher. For example, the lower limit of the thermal decomposition temperature of the polyimide may be 487±1°C, 490±1°C, 493±1°C or 495±1°C or higher, and the upper limit thereof may be 600°C or lower, but is not particularly limited thereto. The thermal decomposition temperature may be measured using TA's thermogravimetric analyzer Q50. In a specific example, the polyimide may be heated up to 100°C at a rate of 10°C/min under a nitrogen atmosphere and then maintained isothermally for 1 hour to remove moisture. Then, the temperature may be raised up to 600°C at a rate of 10°C/min, and the temperature at which a 5% weight loss occurs may be measured.

The glass transition temperature (Tg) of the polyimide may be 300°C or higher. For example, the lower limit of the glass transition temperature may be 305±1°C, 310±1°C, 312±1°C, 315±1°C, 317±1°C or 318±1°C or higher, and the upper limit thereof may be 500°C or lower, but is not particularly limited thereto. The glass transition temperature may be measured for polyimide at 5°C/min using dynamic mechanical analysis (DMA).

Further, the polyimide may have a modulus of 3.0 GPa or more, preferably 3.3 GPa or more, and the upper limit thereof is not specifically limited but may be less than or equal to 30.0 GPa. The modulus may be measured using Instron 5564 UTM from INSTRON.

The polyimide may have a tensile strength of 110 MPa or more, preferably 115 MPa or more, and the upper limit thereof is not particularly limited, but may be 400 MPa or less. The tensile strength may be measured using Instron 5564 UTM from INSTRON.

The polyimide may have an elongation of 5% or more, preferably 5.2% or more, and the upper limit thereof is not specifically limited but may be less than or equal to 30%. The elongation may be measured using Instron 5564 UTM from INSTRON.

In general, to imidize the polyamic acid, a dehydrating agent and a catalyst are added to the polyamic acid, followed by purification and filtration, and drying to remove impurities. However, by using the additive CDI, the method for preparing the polyimide according to the present invention may omit the purification processes such as purification, filtration, and drying for removing by-products (impurities), thereby simplifying the preparation process, while simultaneously preparing a polyimide having excellent thermal and mechanical properties and excellent solubility in solvents.

In another aspect, the present invention provides a polyimide prepared according to the method for preparing the polyimide. Here, the polyimide may be a solvent-soluble polyimide.

The polyimide may be in the form of a varnish, and it is advantageous that the polyimide may be used directly in the form of a varnish without any purification process including purification, filtration, and drying steps, thereby being readily used in polyimide films, fibers or coatings.

In still another aspect, the present invention provides a polyimide film comprising the polyimide of the present invention.

A thickness of the polyimide film may be appropriately selected in consideration of the use of the polyimide film, the use environment, physical properties thereof, and the like. For example, the polyimide film may have a thickness of 1 to 100 µm, 5 to 50 µm, 10 to 40 µm, or 15 to 25 µm, but the thickness thereof is not limited thereto.

Further, in still another aspect, the present invention provides a component comprising a molded body formed from the polyimide.

Specifically, the component may comprise, but not limited to, electronic circuit board members, semiconductor devices, lithium ion battery members, solar cell members, fuel cell members, motor windings, engine peripheral members, paints, optical components, heat insulators, electromagnetic shielding materials, surge components, dental materials, slide coating, and electrostatic chuck.

In still another aspect, the present invention provides separators (membranes), fibers, insulation layers, or coating layers comprising the polyimide as described above.

In still another aspect, the present invention provides a composition for preparing a soluble polyimide comprising a polyamic acid comprising a dianhydride monomer and a diamine monomer as polymerized units; and carbonyl diimidazole.

### [Advantageous Effects]

The method for preparing the polyimide according to the present invention may omit purification, filtration, and drying steps for removing by-products (impurities), thereby simplifying the preparation process, and preparing the polyimide with excellent thermal and mechanical properties.

In addition, it is possible to prepare the polyimide that is fully imidized and has soluble properties in an organic solvent.

Further, the polyimide according to the present invention may be applicable to various fields such as separators (membranes), binders, insulation coatings, coating materials, fibers, etc.

### [Description of Drawings]

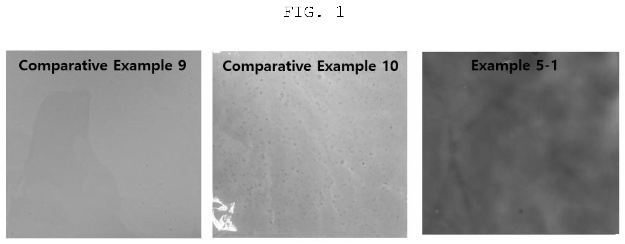

FIG. 1 shows optical images of polyimide films according to Example 5-1 and Comparative Examples 9 and 10.

### [Best Mode]

The following Examples are presented to help understanding of the present invention. The following Examples are only provided to more easily understand the present invention, but the content of the present invention is not limited by these Examples.

### <Example>

### Example 1: Preparation of polyimides (random copolymers)

### Example 1-1

In dimethylformamide (DMF) organic solvent, 5 mol% of 4,4'-methylenebis(2,6-diethylaniline) (MEDA) and 95 mol% of 2,4-diaminotoluene (2,4-TDA) were dissolved in nitrogen/room temperature atmosphere. Then, 100 mol% of 3,3',4,4'-benzophenone tetracarboxylic dianhydride (BTDA) was added, followed by random polymerization with MEDA, 2,4-TDA and BTDA for 1 hour to obtain a polyamic acid composition.

To the obtained polyamic acid composition, 1.0 mol equivalent of carbonyl diimidazole (CDI) was added, and the chemical imidation process was performed in a continuous polymerization batch at 40°C for 2.5 hours to prepare soluble polyimide (20 wt% of solid contents), which was used in the form of a varnish without purification, filtration, and drying. This means that the polyimide has soluble properties in the organic solvent (DMF).

### Example 1-2

A soluble polyimide was prepared in the same manner as in Example 1-1, except that instead of adding 1.0 mol equivalent of carbonyl diimidazole (CDI), 0.9 mol equivalent of carbonyl diimidazole (CDI) was added.

### Example 1-3

A soluble polyimide was prepared in the same manner as in Example 1-1, except that instead of using 5 mol% of methylenebis(2,6-diethylaniline) (MEDA) and 95 mol% of 2,4-diaminotoluene (2,4-TDA), 10 mol% of methylenebis(2,6-diethylaniline) (MEDA) and 90 mol% of 2,4-diaminotoluene (2,4-TDA) were used.

### Example 2: Preparation of polyimides (block copolymers)

### Example 2-1

In dimethylformamide (DMF) organic solvent, 10 mol% of 4,4'-methylenebis(2,6-diethylaniline) (MEDA) was dissolved in nitrogen/room temperature atmosphere. Then, 100 mol% of 3,3',4,4'-benzophenone tetracarboxylic dianhydride (BTDA) was added to the resulting mixture, followed by block polymerization for 1 hour. Next, 90 mol% of 2,4-diaminotoluene (2,4-TDA) was added and block polymerized for 1 hour to obtain a polyamic acid composition.

To the obtained polyamic acid composition, 1.0 mol equivalent of carbonyl diimidazole (CDI) was added, and the chemical imidation process was performed in a continuous polymerization batch at 40°C for 2.5 hours to prepare soluble polyimide (20 wt% of solid contents), which was used in the form of a varnish without purification, filtration, and drying.

### Example 2-2

A soluble polyimide was prepared in the same manner as in Example 2-1, except that instead of using 10 mol% of 4,4'-methylenebis(2,6-diethylaniline) (MEDA) and 90 mol% of 2,4-diaminotoluene (2,4-TDA), 20 mol% of 4,4'-methylenebis(2,6-diethylaniline) (MEDA) and 80 mol% of 2,4-diaminotoluene (2,4-TDA) were added.

### Example 3: Preparation of polyimides (random copolymers)

### Examples 3-1 to 3-3

Soluble polyimides were prepared in the same manner as in Example 1-1, with different types and amounts of monomers and additives as shown in Table 1 below.

### Example 4: Preparation of polyimides (block copolymers)

### Examples 4-1 to 4-3

Soluble polyimides were prepared in the same manner as in Example 2-1, with different types and amounts of monomers and additives as shown in Table 1 below.

### Comparative Example 1: Preparation of polyimide (using catalyst and dehydrating agent)

In dimethylformamide (DMF) organic solvent, 5 mol% of 4,4'-methylenebis(2,6-diethylaniline) (MEDA) and 95 mol% of 2,4-diaminotoluene (2,4-TDA) were dissolved in nitrogen/room temperature atmosphere. Then, 100 mol% of 3,3',4,4'-benzophenone tetracarboxylic dianhydride (BTDA) was added, followed by random polymerization with MEDA, 2,4-TDA and BTDA for 1 hour to obtain a polyamic acid composition.

To the obtained polyamic acid composition, 0.3 mol equivalents of pyridine (catalyst, Py) and 1.0 mol equivalent of acetic anhydride (dehydrating agent, AA) were added, and the resulting mixture was subjected to a chemical imidization process in a continuous polymerization batch at 60°C. Next, after completion of the reaction, the polymer was subjected to purification processes including precipitation in an ethanol non-solvent to remove impurities (unreacted products, catalyst, AA, etc.) and drying in a vacuum oven at a temperature of less than 150°C for 24 hours, thereby preparing polyimide powder (solid content of 20 wt%).

### Comparative Example 2: Preparation of polyimide (including purification processes)

The soluble polyimide prepared according to Example 1-1 was further subjected to purification processes including precipitation in an ethanol non-solvent to remove impurities (unreacted products, catalyst, AA, etc.) and drying in a vacuum oven at a temperature of less than 150°C for 24 hours, thereby preparing polyimide powder.

### Comparative Examples 3 and 4: Preparation of polyimides

Polyimide powders were prepared in the same manner as in Comparative Example 1, with different types and amounts of monomers and additives, and different polymerization methods as shown in Table 1 below.

### Comparative Examples 5 to 8: Preparation of polyimides

Polyimide powders were prepared in the same manner as in Comparative Example 2, with different types and amounts of monomers and additives, and different polymerization methods as shown in Table 1 below.

Table 1 below describes the monomer types and amounts, polymerization methods, additive types and amounts, whether the purification process is performed, and presence of solubility of Examples and Comparative Examples. To evaluate the solubility, the polyimide powder of the Comparative Example was added to the organic solvent N,N'-dimethylformamide (DMF) and stirred for 30 minutes, and the degree of turbidity of the solution was visually confirmed.

**[Table 1]**

| Classifica tion | Dianhydr ide (mol%) BTDA | Diamine (mol%) | | Polymeri zation method | Additive (mol equivalent for polyamic acid) | Whether purificat ion process is performed | Solubil ity (solven t solubil ity) |
|---|---|---|---|---|---|---|---|
| | | MEDA | 2, 4-TDA | | | | |
| Example 1-1 | 100 | 5 | 95 | Random polymeri zation | CDI (1.0 mol equivalent) | X | soluble |
| Example 1-2 | 100 | 5 | 95 | Random polymeri zation | CDI (0.9 mol equivalent) | X | soluble |
| Example 1-3 | 100 | 10 | 90 | Random polymeri zation | CDI (1.0 mol equivalent) | X | soluble |
| Example 2-1 | 100 | 10 | 90 | Block polymeri zation | CDI (1.0 mol equivalent) | X | soluble |
| Example 2-2 | 100 | 20 | 80 | Block polymeri zation | CDI (1.0 mol equivalent) | X | soluble |
| Example 3-1 | 100 | 15 | 85 | Random polymeri zation | CDI (1.0 mol equivalent) | X | soluble |
| Example 3-2 | 100 | 25 | 75 | Random polymeri zation | CDI (0.9 mol equivalent) | X | soluble |
| Example 3-3 | 100 | 30 | 70 | Random polymeri zation | CDI (1.0 mol equivalent) | X | soluble |
| Example 4-1 | 100 | 30 | 70 | Block polymeri zation | CDI (1.0 mol equivalent) | X | soluble |
| Example 4-2 | 100 | 35 | 75 | Block polymeri zation | CDI (1.0 mol equivalent) | X | soluble |
| Example 4-3 | 100 | 40 | 60 | Block polymeri zation | CDI (0.9 mol equivalent) | X | soluble |
| Comparativ e Example 1 | 100 | 5 | 95 | Random polymeri zation | Py (0.3 mol equivalent) AA (1.0 mol equivalent) | ○ | soluble |
| Comparativ e Example 2 | 100 | 5 | 95 | Random polymeri zation | CDI (1.0 mol equivalent) | ○ | soluble |
| Comparativ e Example 3 | 100 | 20 | 80 | Block polymeri zation | Py (0.3 mol equivalent) AA (1.0 mol equivalent) | ○ | soluble |
| Comparativ e Example 4 | 100 | 35 | 75 | Block polymeri zation | Py (0.3 mol equivalent) AA (1.0 mol equivalent) | ○ | soluble |
| Comparativ e Example 5 | 100 | 20 | 80 | Block polymeri zation | CDI (1.0 mol equivalent) | ○ | soluble |
| Comparativ e Example 6 | 100 | 25 | 75 | Random polymeri zation | CDI (0.9 mol equivalent) | ○ | soluble |
| Comparativ e Example 7 | 100 | 30 | 70 | Random polymeri zation | CDI (1.0 mol equivalent) | ○ | soluble |
| Comparativ e Example 8 | 100 | 40 | 60 | Block polymeri zation | CDI (0.9 mol equivalent) | ○ | soluble |

### Example 5: Preparation of polyimide (random copolymer) films

### Example 5-1

The polyimide varnish prepared according to Example 1-1 was coated on a glass substrate to a thickness of 20 µm using a spin coater (MS-B200, Mikasa) and dried at 250°C for 20 minutes. Here, the coating method is not particularly limited. Then, the resulting product was cooled at 25°C and separated from the glass substrate, thereby preparing a polyimide film with a thickness of about 20 µm.

### Examples 5-2 and 5-3

Polyimide films were prepared in the same manner as Example 5-1 except that the polyimide varnishes according to Examples 1-2 and 1-3 were used, respectively, instead of using the polyimide varnish according to Example 1-1.

### Example 6: Preparation of polyimide (block copolymer) films

### Examples 6-1 and 6-2

Polyimide films were prepared in the same manner as Example 5-1 except that the polyimide varnishes according to Examples 2-1 and 2-2 were used, respectively, instead of using the polyimide varnish according to Example 1-1.

### Example 7: Preparation of polyimide (random copolymer) films

### Examples 7-1 to 7-3

Polyimide films were prepared in the same manner as Example 5-1 except that the polyimide varnishes according to Examples 3-1 to 3-3 were used, respectively, instead of using the polyimide varnish according to Example 1-1.

### Example 8: Preparation of polyimide (block copolymer) films

### Examples 8-1 to 8-3

Polyimide films were prepared in the same manner as Example 5-1 except that the polyimide varnishes according to Examples 4-1 to 4-3 were used, respectively, instead of using the polyimide varnish according to Example 1-1.

### Comparative Example 9: Preparation of polyimide film

The polyimide powder prepared according to Comparative Example 1 was dissolved in an organic solvent (DMF) to obtain a solution containing 20 wt% solid content, and the thus obtained solution was coated on a glass substrate to a thickness of 20 µm using a spin coater (MS-B200, Mikasa) and dried at 250°C for 20 minutes. Here, the coating method is not particularly limited. Then, the resulting product was cooled at 25°C and separated from the glass substrate, thereby preparing a polyimide film with a thickness of about 20 µm.

### Comparative Examples 10 to 16: Preparation of polyimide films

The polyimide films were prepared in the same manner as in Comparative Example 9 except that instead of using the polyimide powder prepared according to Comparative Example 1, the polyimide powders prepared according to Comparative Examples 2 to 8 were used, respectively.

### <Experimental Examples>

### Experimental Example 1: Comparison of polyimide in view of appearance

FIG. 1 shows optical images of polyimide films according to Example 5-1 and Comparative Examples 9 and 10.

Referring to FIG. 1, it could be seen that the polyimide film of Example 5-1 had a darker color compared to Comparative Examples 9 and 10. The conventional soluble polyimides implement solubility by imparting flexibility to the molecular chain to reduce the charge transfer complex (CTC) of the imide group, or by introducing bulky substituents into the side chains to increase the steric effect, wherein the films thereof were transparent in color and exhibited reduced mechanical properties. However, the polyimide film according to the present invention had a darker color, indicating that the presence of imidazole between the polyimide polymer chains enhances intermolecular attraction due to hydrogen bonding and improves mechanical properties compared to conventional soluble polyimide due to CTC.

Thus, it could be appreciated that the present invention was capable of preparing a polyimide film with excellent physical properties by using CDI even without performing purification, filtration, and drying processes.

### Experimental Example 2: Evaluation of physical properties of polyimides

### (1) Glass transition temperature (Tg)

For each polyimide film prepared according to Examples and Comparative Examples, the point at which the polyimide rapidly expands at 5°C/min was measured as the on-set point using dynamic mechanical analysis (DMA). Results thereof are shown in Table 2.

### (2) Thermal decomposition temperature (Td) at 5% weight loss

TA's thermogravimetric analyzer Q50 was used, and each polyimide film prepared according to Examples and Comparative Examples was heated up to 100°C at a rate of 10°C/min under a nitrogen atmosphere and then maintained isothermally for 1 hour to remove moisture. Then, the temperature at which a 5% weight loss occurred by heating up to 600°C at a rate of 10°C/min was measured. Results thereof are shown in Table 2 below.

### (3) Young's modulus

With respect to the polyimide films prepared according to Examples and Comparative Examples, the modulus of samples prepared with 400 mm in length and 10 mm in width was measured at a rate (20 mm/min) using Instron 5564 UTM from INSTRON, and the average of 10 samples was calculated. Results thereof are shown in Table 3 below.

### (4) Tensile strength

With respect to the polyimide films prepared according to the Examples and Comparative Examples, the tensile strength of samples prepared with 400 mm in length and 10 mm in width was measured at a rate (20 mm/min) using Instron 5564 UTM from INSTRON, and the average of 10 samples was calculated. Results thereof are shown in Table 3 below.

### (5) Elongation

The elongation of the polyimide films of Example and Comparative Examples was measured by ASTM D882 method under room temperature conditions using Instron 5564 UTM from INSTRON. Results thereof are shown in Table 3 below.

**[Table 2]**

| Classification | Tg (°C) | Td 5wt% (°C) |
|---|---|---|
| Example 5-1 | 332 | 533 |
| Example 5-2 | 330 | 495 |
| Example 5-3 | 325 | 516 |
| Example 6-1 | 326 | 516 |
| Example 6-2 | 318 | 510 |
| Example 7-1 | 320 | 506 |
| Example 7-2 | 312 | 500 |
| Example 8-2 | 311 | 501 |
| Comparative Example 9 | 325 | 529 |
| Comparative Example 10 | 331 | 533 |
| Comparative Example 12 | 310 | 486 |
| Comparative | 294 | 480 |
| Example 13 | | |
| Comparative Example 14 | 312 | 487 |
| Comparative Example 15 | 294 | 480 |
| Comparative Example 16 | 295 | 480 |

**[Table 3]**

| Classification | Modulus (Gpa) | Tensile strength (Mpa) | Elongation (%) |
|---|---|---|---|
| Example 5-1 | 3.97 | 153 | 5.26 |
| Example 5-2 | 3.42 | 135 | 5.41 |
| Example 5-3 | 3.66 | 126 | 5.46 |
| Example 6-1 | 3.51 | 121 | 5.36 |
| Example 6-2 | 3.45 | 119 | 5.37 |
| Example 7-1 | 3.03 | 112 | 4.44 |
| Example 7-2 | 3.58 | 130 | 4.82 |
| Example 8-2 | 3.25 | 128 | 4.25 |
| Comparative Example 9 | 3.73 | 135 | 5.24 |
| Comparative Example 10 | 2.41 | 95 | 4.55 |
| Comparative Example 12 | 3.01 | 121 | 5.07 |
| Comparative Example 16 | 3.01 | 108 | 5.56 |

Table 2 shows that the polyimide films prepared according to Examples 5-1 to 7-2 and 8-2 have similar or improved glass transition temperatures (Tg of 310°C or higher) and thermal decomposition temperatures (Td 5 wt% of 495°C or higher) compared to Comparative Examples 9, 10 and 12 to 16.

Specifically, the polyimide film according to Example 5-1 had the best heat resistance properties, indicating that it is desirable to add the additive CDI in a substantially equimolar amount with the polyamic acid. In addition, it could be appreciated that both randomly polymerized Examples 5-1 to 5-3 and block polymerized Examples 6-1 to 6-2 had excellent heat resistance properties, but Examples 5-1 to 5-3 with randomly arranged polymerized units had better heat resistance properties. In other words, the present invention was found to have excellent heat resistance properties (Tg and Td 5 wt %) by using CDI even without performing purification, filtration, and drying processes.

Table 3 also shows that the polyimide films prepared according to Examples 5-1 to 7-2 and 8-2 have similar or improved modulus (3.03 GPa or more), tensile strength (110 MPa), and elongation (4.2% or more) compared to Comparative Examples 9, 10, 12, and 16.

Specifically, it could be confirmed that the polyimide film of Example 5-1 exhibited improved mechanical properties such as Young's modulus, strength, and elongation compared to Comparative Examples 9 and 10. In other words, as described in Experimental Example 1 above, it could be appreciated that the present invention was capable of preparing a polyimide film with excellent mechanical properties by using CDI even without performing purification, filtration, and drying processes.

Therefore, by using the additive CDI, the present invention was able to prepare a polyimide film having excellent heat resistance properties (Tg and Td 5 wt%) and mechanical properties while implementing process simplification by omitting purification, filtration and drying processes.

In the specification, details capable of being sufficiently recognized and inferred by those skilled in the art of the present invention are omitted, and various modifications can be made within the scope that does not change the technical spirit or essential configuration of the present invention other than the specific examples described in the present specification. Therefore, the present invention may be practiced in other ways than specifically described and exemplified herein, which can be understood by those skilled in the art.

## Claims

1. A method for preparing a polyimide, comprising:
(a) polymerizing a diamine monomer with a dianhydride monomer to prepare a polyamic acid; and
(b) reacting the polyamic acid with carbonyl diimidazole to prepare a soluble polyimide,
wherein the soluble polyimide is in the form of a varnish.

2. The method of claim 1, wherein after step (b), purification, filtration, and drying steps are not performed.

3. The method of claim 1, wherein 0.5 to 1.5 mol equivalents of the carbonyl diimidazole are reacted with 1 mol equivalent of the polyamic acid.

4. The method of claim 1, wherein step (b) is performed at a temperature of 20°C to 60°C.

5. The method of claim 1, wherein step (b) is performed for 0.5 to 5 hours.

6. The method of claim 1, wherein the polymerizing in step (a) is random polymerization or block polymerization.

7. The method of claim 1, wherein the dianhydride monomer comprises at least one selected from the group consisting of pyromellitic dianhydride (PMDA), 3,3',4,4'-benzophenone tetracarboxylic dianhydride (BTDA), oxydiphthalic dianhydride (ODPA), 4,4'-(hexafluoroisopropylidene)diphthalic anhydride (6FDA), biphenyltetracarboxylic dianhydride (BPDA), 3,3',4,4'-diphenylsulfonetetracarboxylic dianhydride (DSDA), and 2,2-bis(4-(3,4-dicarboxyphenoxy)phenyl)propane dianhydride.

8. The method of claim 1, wherein the diamine monomer comprises at least one selected from the group consisting of 4,4'-methylenebis(2,6-diethylaniline) (MEDA), 2,4-diaminotoluene (2,4-TDA), 2,6-diaminotoluene (2,6-TDA), m-phenylenediamine (m-PD), p-phenylenediamine (p-PD), 3,3"-diaminodiphenylsulfone (3,3''-DDS), 2,2-bis(3-amino-4-hydroxyphenyl)hexafluoropropane (6FAP), 3,5-diethyltoluene-2,6-diamine, 3,5-diethyltoluene-2,4-diamine, and 4,4'-methylenebis(2-ethyl-6-methylaniline) (MEMA).

9. The method of claim 8, wherein an amount of the 4,4'-methylenebis(2,6-diethylaniline) (MEDA) in the total diamine monomers is more than 0 mol% and less than or equal to 50 mol%.

10. The method of claim 8, wherein an amount of the 2,4-diaminotoluene (2,4-TDA) in the total diamine monomers is 50 mol% or more and less than 100 mol%.

11. The method of claim 1, wherein the soluble polyimide exhibits soluble properties in an organic solvent for a solid content of 15 wt% or more.

12. The method of claim 1, wherein a thermal decomposition temperature (Td) at 5% weight loss of the soluble polyimide is 485°C or higher.

13. The method of claim 1, wherein a glass transition temperature (Tg) of the soluble polyimide is 300°C or higher.

14. The method of claim 1, wherein the soluble polyimide has a modulus of 3.0 GPa or more, a tensile strength of 110 MPa or more, and an elongation of 5% or more.

15. A soluble polyimide prepared according to the method for preparing the polyimide according to any one of claims 1 to 14.

16. A composition for preparing a soluble polyimide comprising:
a polyamic acid containing a dianhydride monomer and a diamine monomer as polymerized units; and
carbonyl diimidazole.
